# EUROPÄISCHE PATENTSCHRIFT

(11) **EP 3 059 110 B1**
(45) Veröffentlichungstag und Bekanntmachung des Hinweises auf die Patenterteilung: **29.11.2017**
(21) Anmeldenummer: 15156098.4
(22) Anmeldetag: 23.02.2015
(51) Int. Cl.: B60K 15/01, B60K 15/04, F02M 37/00, F16L 47/32, F16L 33/00, F16L 33/30, F16L 47/08

(54) **Einfüllvorrichtung**
Filler device
Dispositif de remplissage

(43) Veröffentlichungstag der Anmeldung: 24.08.2016
(73) Patentinhaber: Magna Steyr Fuel Systems GesmbH, 8261 Sinabelkirchen (AT)
(72) Erfinder: Hendler, René, 8020 Graz (AT); Steinmann, Dominik, 8223 Stubenberg (AT); Zierler, Patrick, 8063 Brodingberg (AT)
(74) Vertreter: Zangger, Bernd

(56) Entgegenhaltungen:
- EP-A1- 1 466 776
- DE-A1- 19 637 276
- DE-A1- 19 650 601
- DE-U1- 20 301 139
- JP-A- 2000 289 469
- US-A1- 2012 227 264
- US-A1- 2013 193 150
- US-B1- 6 561 550

## Beschreibung

### Gebiet der Erfindung

Die vorliegende Erfindung betrifft eine Einfüllvorrichtung für einen Metall-tank, eine Tankvorrichtung mit einer solchen Einfüllvorrichtung und ein Verfahren zur Herstellung der Einfüllvorrichtung.

### Stand der Technik

Eine Einfüllvorrichtung ermöglicht das Befüllen eines Tanks, insbesondere eines Kraftstofftanks eines Kraftfahrzeuges, und verwendet hierzu ein Einfüllrohr, dass typischerweise eine Fluidverbindung zwischen einem Einfüllstutzen und einem Tank bildet. Das Einfüllrohr muss dabei an einem Ende mit dem Einfüllstutzen und am anderen Ende mit dem Tank fluiddicht verbunden sein. Zur Anbindung eines Einfüllrohres an einem Tank ist es bekannt am Tank einen Tankanschlussstutzen vorzusehen und das Einfüllrohr über Zwischenelemente mit dem Tankanschlussstutzen zu verbinden. Als Zwischenelemente werden insbesondere aufgezogene Schlauchverbindungen oder aufgepresste Stahlschnittstellen verwendet.

In jüngerer Zeit werden zunehmend Einfüllrohre aus Kunststoff eingesetzt. Wenn diese mit einem Tank aus Metall verbunden werden sollen ist zusätzlich zur üblichen Verbindungsproblematik auch ein geeigneter Übergang zwischen Metall und Kunststoff vorzusehen. Eine solche gattungsbildende Vorrichtung zeigt die US 2012/0227264 A1.

### Zusammenfassung der Erfindung

Es ist eine Aufgabe der Erfindung, eine Einfüllvorrichtung umfassend ein Einfüllrohr anzugeben, die einfach und zuverlässig mit einem Metalltank verbunden werden kann. Eine weitere Aufgabe ist es eine Tankvorrichtung mit einer solchen Einfüllvorrichtung anzugeben und ein einfaches und kostengünstiges Verfahren zur Herstellung der Einfüllvorrichtung.

Die Lösung der Aufgabe erfolgt durch eine Einfüllvorrichtung für einen Metalltank, umfassend ein Einfüllrohr und ein Koppelelement zur Verbindung des Einfüllrohrs mit dem Metalltank, wobei das Einfüllrohr ein Kunststoffrohr ist und das Koppelement ein Metallteil ist, wobei das Kunststoffrohr auf einen Rohrverbindungsabschnitt des Metallteils aufgeschrumpft ist.

Erfindungsgemäß wird ein Koppelelement zwischen Kunststoff-Einfüllrohr und Metall-Tank verwendet, das selbst bereits aus Metall, bevorzugt aus rostfreiem Stahl, besteht und auf welches das Kunststoff-Einfüllrohr aufgeschrumpft wurde, insbesondere im Zuge der Herstellung des Kunststoff-Einfüllrohres.

Das Einfüllrohr kann insbesondere aus HDPE (High Density Polyethylen) bestehen.

Das Koppelelement kann rotationssymmetrisch aufgebaut sein, beispielsweise ein einfaches Drehteil und somit einfach herstellbar sein.

Das Koppelelement weist erfindungsgemäßm eine nicht-rotationssymmetrische Form auf, insbesondere einen ovalen oder trilobularen Querschnitt, um

einen Formschluss gegen eine Verdrehung des Einfüllrohres relativ zum Koppelelement zu bilden.

Das Koppelelement kann auch ein Fließpress-, Feinguß-, Kokillenguß-, Spritzguß-, MIM-(Metal Injection Molding), oder ein Sinter-Bauteil, insbesondere SLS-Bauteil (selektives Lasersintern), sein.

Zwischen dem Rohrverbindungsabschnitt, in welchem das Einfüllrohr am Koppelelement aufliegt, und einem Tankverbindungsabschnitt des Koppelelements, der zur Verbindung mit dem Metalltank ausgebildet ist, ist bevorzugt ein als Anschlag wirkender erster Kragen am Koppelelement ausgebildet, so dass das aufgeschrumpfte Einfüllrohr stirnseitig auf dem ersten Kragen aufliegt.

Bevorzugt ist im Rohrverbindungsabschnitt, insbesondere am dem Einfüllrohr zugewandten Ende des Koppelelements, ein zweiter Kragen ausgebildet, so dass der zweite Kragen als Hinterschneidung für das aufgeschrumpfte Einfüllrohr wirkt. Der zweite Kragen verhindert somit ein axiales Verschieben des Einfüllrohres.

Vorzugsweise ist zwischen dem ersten Kragen und dem zweiten Kragen zumindest eine Einfüllrohr-Ringdichtung, die zwischen Einfüllrohr und Koppelelement dichtet, angeordnet. Die Ringdichtung kann insbesondere in eine Ringnut des Koppelelements eingesetzt sein. Besonders bevorzugt werden zwei Ringdichtungen in diesem Bereich eingesetzt.

Unter "Ringdichtung" und "Ringnut" ist erfindungsgemäß jeweils eine geschlossene Form mitverstanden, die der Form des Koppelelements folgt, also beispielsweise auch ovale und trilobulare Form.

Eine "Ringdichtung" kann erfindungsgemäß auch als spezielle Formdichtung wie zum Beispiel als X- Ring ausgeführt sein. Eine "Ringnut" kann daher auch der speziellen Form einer solchen Ringdichtung angepasst sein.

In einem dem Einfüllrohr abgewandten Bereich des Koppelelements, also im Tankverbindungsabschnitt, ist vorzugsweise zumindest eine Ringnut zur Aufnahme einer Tank-Ringdichtung angeordnet, bevorzugt zwei Ringnuten.

Eine erfindungsgemäße Tankvorrichtung umfasst bevorzugt einen Metall-tank mit einem Metall-Tankanschlußstutzen und eine erfindungsgemäße Einfüllvorrichtung, wobei das Koppelelement am Metall-Tankanschlussstutzen befestigt ist.

Vorzugsweise ist das Koppelelement in den Metall-Tankanschlussstutzen gesteckt und insbesondere mit einer Fixierfeder im Metall-Tankanschlussstutzen fixiert.

Ein einfaches Verfahren zur Herstellung einer erfindungsgemäßen Einfüllvorrichtung sieht vor, dass das Einfüllrohr unter Erwärmung geformt wird, insbesondere blasgeformt wird, oder nach der Herstellung erwärmt wird, beispielsweise nach dem Spritzgießen, und das Koppelelement in das noch warme Einfüllrohr eingepresst wird. Das Einfüllrohr hat beim Einpressen bevorzugt eine Temperatur von mindestens 70 Grad Celsius, bevorzugt über 80 Grad Celsius, und ist daher noch dementsprechend weich. Beim Abkühlen schrumpft das Einfüllrohr auf das Koppelelement auf, so dass es bereits durch das Aufschrumpfen zu einer Dichtwirkung kommt.

Nach dem Herstellen, insbesondere Blasformen, des Einfüllrohres wird das Einfüllrohr vorzugsweise abgekreist, also beschnitten, bevorzugt während das Einfüllrohr noch warm ist und vor dem Einpressen und Aufschrumpfen.

Bevorzugt wird nach dem Herstellen, insbesondere Blasformen, und gegebenenfalls Abkreisen des Einfüllrohres das Koppelelement auf Anschlag an dem ersten Kragen des Koppelelements eingeschoben und eingepresst.

Bevorzugt bildet nach dem Aufschrumpfen des Einfüllrohres der zweite Kragen des Koppelelements eine Hinterschneidung die das Einfüllrohr am Koppelelement fixiert. Die Dichtwirkung zwischen Einfüllrohr und Koppelelement wird durch den zweiten Kragen am Koppelelement ebenfalls verbessert.

### Kurzbeschreibung der Zeichnungen

Die Erfindung wird im Folgenden beispielhaft unter Bezugnahme auf die Zeichnungen beschrieben.
- Fig.: ist eine Ansicht einer erfindungsgemäßen Einfüllvorrichtung.

### Detaillierte Beschreibung der Erfindung

In der Fig. ist eine erfindungsgemäße Einfüllvorrichtung dargestellt, wobei das Einfüllrohr 1 als Längs-Schnitt dargestellt ist und das Koppelelement 2 in der rechten Hälfte der Darstellung in einer Ansicht von vorne gezeigt ist, wobei die Ausformungen des Koppelelements 2 besser sichtbar sind, in der linken Bildhälfte das Koppelelement 2 in einem Schnitt dargestellt ist, so dass eine bessere Unterscheidung des Bauteils Koppelelement 2 möglich ist.

Das Einfüllrohr 1 ist ein Kunststoffrohr, das Koppelement 2 ist ein Metall-Drehteil und weist im Wesentlichen die Form eines Hohlzylinders auf. Das Koppelelement 2 weist einen Rohrverbindungsabschnitt 3 auf, in welchem das Einfüllrohr 1 auf das Koppelelement 2 aufgeschrumpft ist. Zusätzlich weist das Koppelelement 2 einen Tankverbindungsabschnitt 4 auf, der zur Befestigung des Koppelelements 2 an einem Tank, insbesondere an einem Tankstutzen, ausgebildet ist.

Zwischen dem Rohrverbindungsabschnitt 3 und dem Tankverbindungsabschnitt 4 des Koppelelements 2 ist ein erster Kragen 5 des Koppelelements 2 ausgebildet, der als Anschlag für das Einfüllrohr 1 wirkt, so dass das aufgeschrumpfte Einfüllrohr 1 an dessen Stirnseite auf dem ersten Kragen 5 aufliegt.

Am dem Einfüllrohr 1 zugewandten Ende des Koppelelements 2 ist ein zweiter Kragen 6 ausgebildet, der als Hinterschneidung für das aufgeschrumpfte Einfüllrohr 1 wirkt.

Zwischen dem ersten Kragen 5 und dem zweiten Kragen 6 sind zwei Einfüllrohr-Ringdichtungen 7 zwischen Einfüllrohr 1 und Koppelelement 2 angeordnet.

In einem dem Einfüllrohr 1 abgewandten Bereich des Koppelelements 2, also im Tankverbindungsabschnitt 4, sind zwei Ringnuten 8 zur Aufnahme jeweils einer Tank-Ringdichtung angeordnet.

### Bezugszeichenliste

- 1: Einfüllrohr
- 2: Koppelelement
- 3: Rohrverbindungsabschnitt
- 4: Tankverbindungsabschnitt
- 5: erster Kragen
- 6: zweiter Kragen
- 7: Einfüllrohr-Ringdichtung
- 8: Ringnut

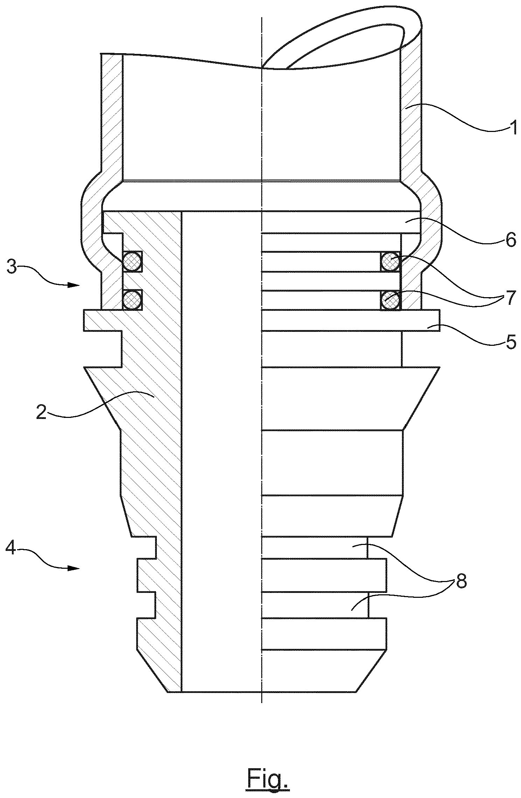

## Patentansprüche

1. Einfüllvorrichtung für einen Metalltank, umfassend ein Einfüllrohr (1) und ein Koppelelement (2) zur Verbindung des Einfüllrohrs (1) mit dem Metalltank, wobei das Einfüllrohr (1) ein Kunststoffrohr ist und das Koppelement (2) ein Metallteil ist, **dadurch gekennzeichnet, dass** das Kunststoffrohr auf einen Rohrverbindungsabschnitt (3) des Metallteils aufgeschrumpft ist, wobei das Koppelelement (2) eine nicht-rotationssymmetrische Form aufweist, insbesondere einen ovalen oder trilobularen Querschnitt.

2. Einfüllvorrichtung nach Anspruch 1,
**dadurch gekennzeichnet, dass** zwischen dem Rohrverbindungsabschnitt (3) und einem Tankverbindungsabschnitt (4) des Koppelelements (2) ein als Anschlag wirkender erster Kragen (5) ausgebildet ist, so dass das aufgeschrumpfte Einfüllrohr (1) stirnseitig auf dem ersten Kragen (5) aufliegt.

3. Einfüllvorrichtung nach zumindest einem der vorhergehenden Ansprüche,
**dadurch gekennzeichnet, dass** im Rohrverbindungsabschnitt (3), insbesondere am dem Einfüllrohr (1) zugewandten Ende des Koppelelements (2), ein zweiter Kragen (6) ausgebildet ist, so dass der zweite Kragen (6) als Hinterschneidung für das aufgeschrumpfte Einfüllrohr (1) wirkt.

4. Einfüllvorrichtung nach Anspruch 2 und Anspruch 3,
**dadurch gekennzeichnet, dass** zwischen dem ersten Kragen (5) und dem zweiten Kragen (6) zumindest eine Einfüllrohr-Ringdichtung (7) zwischen Einfüllrohr (1) und Koppelelement (2) angeordnet ist.

5. Einfüllvorrichtung nach zumindest einem der vorhergehenden Ansprüche,
**dadurch gekennzeichnet, dass** in einem dem Einfüllrohr (1) abgewandten Bereich des Koppelelements (2), also in einem Tankverbindungsabschnitt (4), zumindest eine Ringnut (8) zur Aufnahme einer Tank-Ringdichtung angeordnet ist, bevorzugt zwei Ringnuten (8).

6. Tankvorrichtung umfassend einen Metalltank mit einem Metall-Tankanschlußstutzen und eine Einfüllvorrichtung nach zumindest einem der vorhergehenden Ansprüche, wobei das Koppelelement (2) am Metall-Tankanschlussstutzen befestigt ist.

7. Tankvorrichtung nach Anspruch 6, wobei das Koppelelement (2) in den Metall-Tankanschlussstutzen gesteckt ist und insbesondere mit einer Fixierfeder im Metall-Tankanschlussstutzen fixiert ist.

8. Verfahren zur Herstellung einer Einfüllvorrichtung nach zumindest einem der Ansprüche 1 bis 5, **dadurch gekennzeichnet, dass** das Einfüllrohr (1) unter Erwärmung hergestellt wird, insbesondere blasgeformt wird, oder nach der Herstellung erwärmt wird, beispielsweise nach dem Spritzgießen, und das Koppelelement (2) in das vom Herstellen oder Erwärmen noch warme Einfüllrohr (1) eingepresst wird.

9. Verfahren nach Anspruch 8 zur Herstellung einer Einfüllvorrichtung nach Anspruch 2,
**dadurch gekennzeichnet, dass** das Koppelelement (2) auf Anschlag an dem ersten Kragen (5) des Koppelelements (2) in das warme Einfüllrohr (1) eingepresst wird.

10. Verfahren nach Anspruch 8 oder 9 zur Herstellung einer Einfüllvorrichtung nach Anspruch 3,
**dadurch gekennzeichnet, dass** das Koppelelement (2) in das warme Einfüllrohr (1) eingepresst wird, so dass das Einfüllrohr (1) den zweiten Kragen (6) überdeckt und zumindest nach dem Abkühlen und Aufschrumpfen des Einfüllrohres der zweite Kragen (6) als Hinterschneidung für das aufgeschrumpfte Einfüllrohr (1) wirkt.

11. Verfahren nach zumindest einem der Ansprüche 8 bis 10, **dadurch gekennzeichnet, dass** nach dem Herstellen, insbesondere Blasformen, des Einfüllrohres (1) das Einfüllrohr (1) abgekreist wird.

## Claims

1. Filler device for a metal tank comprising a filler pipe (1) and a coupling element (2) for connecting the filler pipe (1) to the metal tank, wherein the filler pipe (1) is a plastics pipe and the coupling element (2) is a metal part, **characterized in that** the plastics pipe is shrink-fitted onto a pipe connection portion (3) of the metal part, wherein the coupling element (2) has a non-rotationally symmetrical shape, in particular an oval or trilobular cross section.

2. Filler device according to Claim 1, **characterized in that** a first collar (5) acting as a stop is configured between the pipe connection portion (3) and a tank connection portion (4) of the coupling element (2) so that the shrink-fitted filler pipe (1) bears on the front face against the first collar (5).

3. Filler device according to at least one of the preceding claims, **characterized in that** a second collar (6) is configured in the pipe connection portion (3), in particular at the end of the coupling element (2) facing the filler pipe (1), so that the second collar (6) acts as an undercut for the shrink-fitted filler pipe (1).

4. Filler device according to Claim 2 and Claim 3, **characterized in that**, between the first collar (5) and the second collar (6), at least one filler-pipe annular seal (7) is arranged between the filler pipe (1) and the coupling element (2).

5. Filler device according to at least one of the preceding claims, **characterized in that** at least one annular groove (8), preferably two annular grooves (8), is/are arranged in a region of the coupling element (2) remote from the filler pipe (1), i.e. in a tank connection portion (4), for receiving a tank annular seal.

6. Tank device comprising a metal tank, having a metal tank connector pipe and a filler device according to at least one of the preceding claims, wherein the coupling element (2) is fastened to the metal tank connector pipe.

7. Tank device according to Claim 6, wherein the coupling element (2) is inserted into the metal tank connector pipe and, in particular, is fixed by a fixing spring in the metal tank connector pipe.

8. Method for producing a filler device according to at least one of Claims 1 to 5, **characterized in that** the filler pipe (1) is produced by heating, in particular is blow-moulded, or is heated after production, for example after the injection-moulding, and the coupling element (2) is pressed into the filler pipe (1) which is still warm from production or heating.

9. Method according to Claim 8 for producing a filler device according to Claim 2, **characterized in that** the coupling element (2) is pressed into the warm filler pipe (1), so that said filler pipe bears against the stop on the first collar (5) of the coupling element (2).

10. Method according to Claim 8 or 9 for producing a filler device according to Claim 3, **characterized in that** the coupling element (2) is pressed into the warm filler pipe (1) so that the filler pipe (1) covers the second collar (6) and at least after the cooling and shrink-fitting of the filler pipe the second collar (6) acts as an undercut for the shrink-fitted filler pipe (1).

11. Method according to at least one of Claims 8 to 10, **characterized in that** after the production, in particular the blow-moulding, of the filler pipe (1) the edges of the filler pipe (1) are rounded off.

## Revendications

1. Dispositif de remplissage d'une cuve métallique comprenant un tube de remplissage (1) et un élément d'accouplement (2) assurant la liaison entre le tube de remplissage (1) et la cuve métallique,
le tube de remplissage (1) étant un tube en matière synthétique et l'élément d'accouplement (2) une pièce métallique,
**caractérisé en ce que**
le tube en matière synthétique est rétréci sur une section tubulaire de liaison (3) de la pièce métallique, l'élément d'accouplement (2) présentant une forme sans symétrie de rotation et en particulier une section transversale ovale ou trilobée.

2. Dispositif de remplissage selon la revendication 1, **caractérisé en ce qu'**un premier collet (5) servant de butée est formé entre la section (3) de liaison au tube et une section (4) de liaison à la cuve de l'élément d'accouplement (2) de telle sorte que le tube de remplissage (1) rétréci repose frontalement sur le premier collet (5).

3. Dispositif de remplissage selon au moins l'une des revendications précédentes, **caractérisé en ce qu'**un deuxième collet (6) est formé dans la section (3) de liaison au tube, en particulier sur l'extrémité de l'élément d'accouplement (2) non tournée vers le tube de remplissage (1), de telle sorte que le deuxième collet (6) joue le rôle d'une contre-dépouille pour le tube de remplissage (1) rétréci.

4. Dispositif de remplissage selon la revendication 2 et la revendication 3, **caractérisé en ce qu'**un joint annulaire (7) d'étanchéité de tube de remplissage est disposé entre le premier collet (5) et le deuxième collet (6) entre le tube de remplissage (1) et l'élément d'accouplement (2).

5. Dispositif de remplissage selon au moins l'une des revendications précédentes, **caractérisé en ce que** au moins une rainure annulaire (8) servant à reprendre un joint annulaire d'étanchéité de cuve, et de préférence deux rainures annulaires (8), sont disposées dans une partie de l'élément d'accouplement (2) non tournée vers le tube de remplissage (1) et donc dans une section (4) de liaison à la cuve.

6. Ensemble de cuve comportant une cuve métallique et une tubulure de raccordement à la cuve métallique ainsi qu'un ensemble de remplissage selon au moins l'une des revendications précédentes, l'élément d'accouplement (2) étant fixé sur la tubulure de raccordement de la cuve métallique.

7. Ensemble de cuve selon la revendication 6, dans lequel l'élément d'accouplement (2) est enfoncé dans la tubulure de raccordement à la cuve métallique et est fixé dans la tubulure de raccordement à la cuve métallique en particulier au moyen d'un ressort de fixation.

8. Procédé de fabrication d'un ensemble de remplissage selon au moins l'une des revendications 1 à 5, **caractérisé en ce que** le tube de remplissage (1) est réalisé par chauffage et est en particulier par moulage-soufflage ou est chauffé après sa fabrication, par exemple après moulage par injection, l'élément d'accouplement (2) étant enfoncé dans le tube de remplissage (1) encore chaud du fait de la fabrication ou de l'échauffement.

9. Procédé selon la revendication 8 de fabrication d'un ensemble de remplissage selon la revendication 2, **caractérisé en ce que** l'élément d'accouplement (2) est enfoncé dans le tube de remplissage (1) chaud en butant contre le premier collet (5) de l'élément d'accouplement (2).

10. Procédé selon les revendications 8 ou 9 de fabrication d'un ensemble de remplissage selon la revendication 3, **caractérisé en ce que** l'élément d'accouplement (2) est enfoncé dans le tube de remplissage (1) chaud de telle sorte que le tube de remplissage (1) recouvre le deuxième collet (6) et qu'au moins après le refroidissement et le rétrécissement du tube de remplissage, le deuxième collet (6) serve de contre-dépouille pour le tube de remplissage (1) qui a rétréci.

11. Procédé selon au moins l'une des revendications 8 à 10, **caractérisé en ce que** le tube de remplissage (1) est arrondi après la fabrication et en particulier le moulage-soufflage du tube de remplissage (1).
